**Europäisches Patentamt**

**European Patent Office**

**Office européen des brevets**

(19)

(11) Veröffentlichungsnummer : **0 463 304 B1**

(12) **EUROPÄISCHE PATENTSCHRIFT**

(45) Veröffentlichungstag der Patentschrift :
**19.01.94 Patentblatt 94/03**

(21) Anmeldenummer : **91105762.8**

(22) Anmeldetag : **11.04.91**

(51) Int. Cl.⁵ : **C01B 15/08**

(30) Priorität : **29.06.90 DE 4020856**

(43) Veröffentlichungstag der Anmeldung :
**02.01.92 Patentblatt 92/01**

(45) Bekanntmachung des Hinweises auf die
Patenterteilung :
**19.01.94 Patentblatt 94/03**

(84) Benannte Vertragsstaaten :
**AT BE CH DE FR GB IT LI NL SE**

(56) Entgegenhaltungen :
**DE-B- 1 080 083**
**US-A- 3 036 885**

(54) **Verfahren zur Herstellung von lagerstabilen wässrigen Natriumperoxomonosulfatlösungen.**

(73) Patentinhaber : **DEGUSSA AG**
**Weissfrauenstrasse 9**
**D-60311 Frankfurt (DE)**

(72) Erfinder : **Bertsch-Frank, Birgit, Dr.**
**Grünaustrasse 15**
**W-6450 Hanau 9 (DE)**
Erfinder : **Düker, Axel, Dr.**
**Fallbachstrasse 6**
**W-6451 Neuberg 1 (DE)**
Erfinder : **Bittner, Friedrich, Dr.**
**Mozartstrasse 38**
**W-6232 Bad Soden i.Ts. (DE)**
Erfinder : **Rössler, Gert, Dr.**
**Friedrich-Ebert-Strasse 36**
**W-5040 Brühl (DE)**

EP 0 463 304 B1

Jouve, 18, rue Saint-Denis, 75001 PARIS

**Beschreibung**

Die Erfindung betrifft ein Verfahren zur Herstellung von lagerstabilen wäßrigen Natriumperoxomonosulfatlösungen mit einem Gehalt von 5 bis 50 Gew.-% Natriumperoxomonosulfat ($NaHSO_5$) durch Teilneutralisation einer Caro'sche Säure ($H_2SO_5$) und Schwefelsäure enthaltenden wäßrigen Lösung mit Natriumhydroxid oder Natriumcarbonat.

Peroxomonoschwefelsäure (Caro'sche Säure) und ihre Salze (Peroxomonosulfate) gewinnen zunehmend Bedeutung als Oxidationsmittel bei der oxidativen Entfernung von Schadstoffen aus Abwässern. Caro'sche Säure ist in solchen Verfahren zwar wirksam, aber sie muß wegen ihrer begrenzten Lagerstabilität in situ oder direkt vor ihrer Verwendung erzeugt werden. Die Caro'sche Säure enthaltenden Ätzlösungen zur Herstellung gedruckter Schaltungen, wie sie beispielsweise in der EP-A 0 256 284 beschrieben worden sind, weisen eine begrenzte Stabilität bezüglich des Aktivsauerstoffs auf; unter den angegebenen Testbedingungen - 5 Stunden, 70 °C - beträgt der Verlust etwa 15 %, wenn die eingesetzte Lösung etwa 4,6 Gew.-% Peroxomonoschwefelsäure enthält. Solche Lösungen sind somit nicht marktfähig.

Obgleich Peroxomonosulfate der Alkali- und Erdalkalimetalle sowie einiger weiterer Metalle und des Ammoniums an sich bekannt sind - siehe DE-PS 10 80 083 -, haben in die Praxis nur das Kaliumperoxomonosulfat in der Form des lagerstabilen Tripelsalzes $2KHSO_5 \cdot KHSO_4 \cdot K_2SO_4$ sowie das Ammoniumperoxomonosulfat in der Form einer Lösung, der sogenannten "ammoniumstabilisierten Caro'schen Säure" Eingang gefunden. Da aber das genannte kaliumhaltige Tripelsalz im allgemeinen vor der Verwendung in einer Lösestation gelöst werden muß und das Ammoniumion der damit stabilisierten Caro'schen Säure selbst als kritischer Abwasserinhaltsstoff angesehen werden muß, besteht ein Bedarf an leicht handhabbaren und ökotoxikologisch unbedenklichen lagerstabilen Peroxomonosulfatlösungen. Von Natriumperoxomonosulfat enthaltenden Lösungen konnte eine ökotoxikologische Unbedenklichkeit erwartet werden.

Nach den in der DE-PS 10 80 083 beschriebenen Verfahren werden Metallmonopersulfate durch Umsetzung von Caro'scher Säure oder Mischungen von Caro'scher Säure und Schwefelsäure mit den Hydroxiden oder Carbonaten der betreffenden Metalle bis zu einem pH-Wert des Reaktionsgemisches von nicht mehr als 3 hergestellt. Das zunächst erhaltene Reaktionsgemisch wird unmittelbar nach seiner Herstellung mittels Vakuum- oder Zerstäubungstrocknung in ein das entsprechende Peroxomonosulfat enthaltendes Salzgemisch überführt. Um zu ausreichend lagerstabilen Produkten zu gelangen, werden vorzugsweise vor oder während der Trocknung stabilisierend wirkende Verdünnungsmittel zugesetzt.

In dem Verfahren der DE-PS 10 80 083 können Caro'sche Säure und Schwefelsäure enthaltende Lösungen eingesetzt werden, welche entweder durch Elektrolyse einer Schwefelsäure mit einem Gehalt von vorzugsweise 35 bis 50 Gew.-% mit nachfolgender Hydrolyse der gebildeten Peroxodischwefelsäure oder durch Umsetzung von 50 bis 88 gew.-%igem wäßrigen Wasserstoffperoxid mit konzentrierter oder rauchender Schwefelsäure (Oleum) erhalten worden ist. Zur Herstellung von Natriumperoxomonosulfat werden solche $H_2SO_5/H_2SO_4$-Lösungen mit einer Sodalösung bis auf pH 2,9 neutralisiert, vom ausgefallenen Glaubersalz befreit und anschließend getrocknet.

Als unbefriedigend bei dem vorstehend gewürdigten Verfahren zur Herstellung von $NaHSO_5$ enthaltenden Lösungen erwies sich, daß bei der Neutralisation ein erheblicher Aktivsauerstoffverlust beobachtet wurde - auch im betreffenden Beispiel der DE-PS 10 80 083 wird die Ausbeute an $NaHSO_5$ in der Lösung mit nur 85 % der Theorie angegeben. Zusätzlich war die Lagerstabilität der Lösung unbefriedigend: der Aktivsauerstoffgehalt nahm in nicht tolerabler Weise ab, und gleichzeitig wurde die Lösung durch ausfallendes Glaubersalz immer wieder getrübt. Offensichtlich waren die bei der Nacharbeitung des Verfahrens festgestellten Probleme auch Ursache dafür, daß an keiner Stelle der DE-PS 10 80 083 auf die Verwendbarkeit der Lösung hingewiesen, sondern diese stets eingedampft wurde. Die Trocknung der $NaHSO_5$ enthaltenden Lösung zwecks Erhalt eines lagerstabilen festen Produkts ist aber mit einem weiteren Aktivsauerstoffverlust verbunden und zudem technisch aufwendig, wodurch die Wirtschaftlichkeit gemindert wird.

Aufgabe der Erfindung ist, ein Verfahren zur Herstellung lagerstabiler wäßriger Natriumperoxomonosulfatlösungen aufzuzeigen, das die Nachteile des aus der DE-PS 10 80 083 bekannten Verfahrens nicht aufweist. Das Verfahren sollte also zu lagerstabilen Lösungen führen und durch einen niedrigen Aktivsauerstoffverlust bei der Neutralisation der $H_2SO_5/H_2SO_4$-Lösungen gekennzeichnet sein.

Gelöst wird die Aufgabe durch ein Verfahren zur Herstellung von lagerstabilen wäßrigen Natriumperoxomonosulfatlösungen mit einem Gehalt von 5 bis 50 Gew.-% Natriumperoxomonosulfat durch Teilneutralisation einer Caro'sche Säure ($H_2SO_5$) und Schwefelsäure enthaltenden Lösung, welche erhalten wurde durch Umsetzung von Schwefelsäure oder Oleum mit mindestens 50 gew.-%igem wäßrigen Wasserstoffperoxid oder durch Elektrolyse einer mindestens 30 gew.-%igen wäßrigen Schwefelsäure mit nachfolgender Hydrolyse der gebildeten Peroxodischwefelsäure, mit Natriumhydroxid oder Natriumcarbonat bei einer Temperatur unter 50 °C, das dadurch gekennzeichnet ist, daß man eine solche Caro'sche Säure und Schwefelsäure enthaltende

2

Lösung verwendet, welche weniger als 3 Gewichtsteile Wasserstoffperoxid pro 100 Gewichtsteile Caro'sche Säure ($H_2SO_5$) enthält, und die Teilneutralisation bis zu einem Äquivalentverhältnis von Gesamt-$SO_3$ zu Natriumionen im Bereich von 1 zu 1 bis 1 zu 1,3 vornimmt und, sofern erwünscht, durch Verdünnen mit Wasser oder durch Abdestillieren von Wasser unter vermindertem Druck während oder nach der Teilneutralisation den Gehalt an $NaHSO_5$ einstellt.

Es wurde gefunden, daß sowohl die Ausbeute an Aktivsauerstoff bei der Teilneutralisation einer schwefelsauren Caro'schen Säure als auch die Lagerstabilität der gewonnenen Natriumperoxomonosulfat enthaltenden Lösung hinsichtlich des Aktivsauerstoffgehalts in maßgeblichem Umfang von dem Gehalt an Wasserstoffperoxid in der eingesetzten schwefelsauren Caro'schen Säurelösung bzw. in der Natriumperoxomonosulfatlösung abhängen. Je niedriger der $H_2O_2$-Gehalt in der $H_2SO_5$/$H_2SO_4$-Lösung bzw. in der $NaHSO_5$/$NaHSO_4$-Lösung ist, desto geringer sind die Aktivsauerstoffverluste bei der Teilneutralisation und bei der Lagerung. Dieses Verhalten war zuvor nicht zu erwarten gewesen. Es wird aufgrund der analytischen Untersuchungen zum erfindungsgemäßen Verfahren angenommen, daß Wasserstoffperoxid bei der Neutralisationsstufe teilweise sofort und bei der Lagerung etwas langsamer unter Zersetzung mit $H_2SO_5$ bzw. $NaHSO_5$ reagiert, wobei von einer äquimolaren Zersetzungsreaktion ausgegangen werden muß.

Bei Einhaltung des erfindungsgemäßen Äquivalentverhältnisses von Gesamt-$SO_3$ zu Natriumionen von 1 zu 1 bis 1 zu 1,3 werden zudem $NaHSO_5$-Lösungen mit einem pH-Wert von etwa 1 oder unter 1 erhalten, aus welchen beim mehrwöchigen Lagern praktisch kein Feststoff abgeshieben wird. Die erfindungsgemäß hergestellten Lösungen sind somit wirtschaftlich, d. h. mit hoher Aktivsauerstoffausbeute, herstellbar und wegen ihrer hohen Lagerstabilität marktfähig. Der Verwender von Peroxomonosulfat enthaltenden wäßrigen Lösungen, etwa zum Behandeln von Abwässern zwecks oxidativer Entfernung giftiger Abwasserinhaltsstoffe, braucht solche Lösungen nicht mehr direkt vor Gebrauch selbst herzustellen oder ammoniumhaltige Lösungen zu verwenden, sondern er kann sich der erfindungsgemäßen Lösungen bedienen, welche ausreichend lagerstabil sind. Zur weiteren Erhöhung der Lagerstabilität können den erfindungsgemäß hergestellten Natriumperoxomonosulfatlösungen an sich bekannte Stabilisatoren für Peroxomonosulfate, beispielsweise Dipicolinsäure Stannate und Chelatkomplexbildner, insbesondere aus der Reihe der Phosphonate wie Hydroxyalkylidendiphosphonate. Ethylendiamintetra(methylenphosphonsäure), und Diethylentriaminpenta-(methylenphosphonsäure), in einer wirksamen Menge bereits bei oder nach der Herstellung der Lösungen zugesetzt werden. Die erfindungsgemäß hergestellten Lösungen sind aber auch in Abwesenheit solcher Stabilisatoren viel stabiler als Peroxymonoschwefelsäurelösungen vergleichbaren Aktivsauerstoffgehalts.

Lösungen mit einem Äquivalentverhältnis von Gesamt-$SO_3$ zu Natriumionen von 1 zu größer 1,3 weisen pH-Werte oberhalb 1 auf und sind nicht mehr ausreichend lagerstabil, da Feststoff ausfällt - siehe Beispiele 12 bis 14. Unter "Gesamt-$SO_3$" wird jene Molmenge verstanden, welche in der eingesetzten schwefelsauren Caro'schen Säure in Form von $H_2SO_5$, $H_2SO_4$ und $H_2S_2O_8$ gebunden ist. Bei einem Äquivalentverhältnis von 1 zu kleiner 1 nimmt die Stabilität bezüglich des Aktivsauerstoffgehalts ab, da sich hier die geringe Stabilität der Caro'schen Säure zunehmend bemerkbar macht - siehe Beispiel 1.

Die im erfindungsgemäßen Verfahren zu verwendende Caro'sche Säure und Schwefelsäure enthaltenden Lösungen sind in an sich bekannter Weise zugänglich - siehe z. B. DE-PS 10 80 083. Im wesentlichen kommen zwei Verfahrensprinzipien infrage, nämlich (1) die Umsetzung von konzentrierter Schwefelsäure oder Oleum (Lösungen von $SO_3$ in Schwefelsäure) mit wäßrigem Wasserstoffperoxid und (2) die Hydrolyse einer elektrolytisch erzeugten Peroxodischwefelsäure enthaltenden wäßrig-schwefelsauren Lösung. Wesentlich ist, daß nur solche Lösungen der erfindungsgemäßen Teilneutralisation zugeführt werden sollen, deren Wasserstoffperoxidgehalt weniger als 3 Gewichtsteile, vorzugsweise weniger als 2,5 und insbesondere weniger als 2 Gewichtsteile pro 100 Gewichtsteile Caro'sche Säure beträgt. Je nach dem vorgesehenen Einsatzzweck der $NaHSO_5$ enthaltenden Lösung kann es zweckmäßig sein, solche $H_2SO_5$/$H_2SO_4$-Lösungen zu verwenden, welche nicht nur einen möglichst niedrigen $H_2O_2$-Gehalt, sondern gleichzeitig einen möglichst niedrigen Peroxodisulfatgehalt, vorzugsweise unter 5 Gew.-teile $H_2S_2O_8$ pro 100 Gewichtsteile Caro'sche Säure, aufweisen. Die Auswahl der geeigneten Lösung erfordert die Kenntnis des als $H_2O_2$, $H_2SO_5$ und $H_2S_2O_8$ gebundenen Aktivsauerstoffs. Die einzelnen Komponenten lassen sich in einfacher Weise potentiometrisch unter Verwendung einer Cer(IV)-sulfatlösung und Natriumarsenitlösung in der gleichen Probe hintereinander bestimmen: Durch Titration einer Probe mit einer $Ce(SO_4)_2$-Lösung erfaßt man zunächst den $H_2O_2$-Gehalt; nach Zugabe eines Überschusses an $NaAsO_2$-Lösung zur, wie vorstehend beschrieben, austitrierten Probe und Rücktitration mit der $Ce(SO_4)_2$-Lösung erhält man den Wert für den $H_2SO_5$-Gehalt; nach erneuter Zugabe einer $NaAsO_2$-Lösung im Überschuß, 15minütigem Kochen und Rücktitration mit der $Ce(SO_4)_2$-Lösung gelangt man zum Gehalt an $H_2S_2O_8$. Die gleiche Bestimmungsmethode eignet sich auch zur Gehaltsbestimmung der teilneutralisierten Lösungen.

Durch Hydrolyse einer elektrolytisch erzeugten $H_2S_2O_8$ enthaltenden Lösung ist es zwar möglich, $H_2SO_5$-Lösungen mit niedrigem $H_2O_2$-Gehalt zu erhalten, aber der $H_2S_2O_8$-Gehalt liegt in der Regel deutlich oberhalb von 5, meist oberhalb von 10 Gewichtsteilen pro 100 Gewichtsteile $H_2SO_5$. Bei weitergehender Hydrolyse besteht aber die Gefahr einer Steigerung des $H_2O_2$-Gehaltes und zusätzlich Minderung des Aktivsauerstoffgehalts.

Die Umsetzung von Wasserstoffperoxid mit Schwefelsäure oder Oleum ist eine Gleichgewichtsreaktion. Je nach der Konzentration der Reaktanden und dem gewählten Molverhältnis ist es möglich, Lösungen mit unterschiedlichem $H_2SO_5$-Gehalt und $H_2O_2$-Restgehalt zu erhalten. Zur Herstellung von $H_2SO_5$ und $H_2SO_4$ enthaltenden Lösungen mit einem $H_2O_2$-Gehalt unter 3 Gewichtsteilen pro 100 Gewichtsteile $H_2SO_5$ werden wäßrige $H_2O_2$-Lösungen mit einem $H_2O_2$-Gehalt von mindestens 50 Gew.-%, insbesondere 70 bis etwa 85 Gew.-%, sowie rauchende Schwefelsäure, auch Oleum genannt, mit einem $SO_3$-Gehalt von mindestens 20 Gew.-%, vorzugsweise über 50 Gew.-%, insbesondere etwa 65 Gew.-%, eingesetzt. Das Molverhältnis von Wasserstoffperoxid zu Gesamt-$SO_3$ - Summe aus $SO_3$ und als $H_2SO_4$ gebundenes $SO_3$ - beträgt 1 zu 1,1 bis 1 zu 1,6. Die Konzentration an $H_2O_2$ im wäßrigen Wasserstoffperoxid, die Konzentration an $SO_3$ im Oleum sowie das Molverhältnis sind so aufeinander abzustimmen, daß das Molverhältnis des mit dem wäßrigen Wasserstoffperoxid in das Reaktionssystem eingebrachten Wassers zu dem mit dem Oleum eingebrachten Schwefeltrioxid kleiner 1 ist; ein Molverhältnis im Bereich um 0,8 ist gut geeignet. Unter den genannten Bedingungen ist es möglich, die bevorzugt einzusetzenden Lösungen mit einem $H_2SO_5$-Gehalt von 50-65 Gew.-%, einem $H_2SO_4$-Gehalt von 20 bis 40 Gew.-% und $H_2O_2$-Gehalt von weniger als 1,5 Gew.-%, insbesondere weniger als 1 Gew.-% in hoher Ausbeute zu erhalten, welche direkt oder nach partieller Verdünnung mit Wasser der Teilneutralisation zugeführt werden können.

Zur Teilneutralisation eignen sich Natronlauge oder eine Sodalösung. Bevorzugt wird eine Natronlauge mit einem Gehalt von 10-50 Gew.-%; sofern hochkonzentrierte $NaHSO_5$-Lösungen erwünscht sind, wird man eine Natronlauge im oberen Konzentrationsbereich einsetzen. Die Neutralisationswärme wird im allgemeinen durch Kühlung abgeführt, so daß eine Reaktionstemperatur unter 50 °C, vorzugsweise unter 35 °C eingehalten wird. Die Kühlung kann durch übliche Kühlung des Reaktors, etwa mittels Wärmeaustauschern oder durch Verdampfungskühlung, bewerkstelligt werden.

Das Verfahren der Erfindung kann diskontinuierlich oder kontinuierlich durchgeführt werden. Bei kontinuierlicher Ausführung wird die Umsetzung vorzugsweise in einer Reaktionsschlaufe ausgeführt. Die Schlaufe enthält einen Reaktor, vorzugsweise einen rohrförmigen Reaktor, der vorzugsweise mit Mischeinrichtungen, etwa einem oder mehreren statischen Mischern, jeweils mindestens eine Dosierstelle für die Natronlauge oder Sodalösung und die Caro'sche Säure enthaltende Lösung und einer wirksamen Kühlvorrichtung ausgestattet ist; weitere Bestandteile der Schlaufe sind eine mit einem Förderorgan ausgestattete Umlaufleitung und eine Abnahmestelle für die teilneutralisierte Natriumperoxomonosulfatlösung. Zu der in der Schlaufe umlaufenden teilneutralisierten Lösung der gewünschten Konzentration an $NaHSO_5$ und $NaHSO_4$ wird im ersten Teil des Reaktors die schwefelsaure Caro'sche Säure eindosiert und mit der umlaufenden Lösung gemischt; in einem von der genannten Dosierstelle für die Erzielung einer ausreichend homogenen Mischung entfernten Stelle wird Natronlauge eindosiert und gemischt. Der Reaktorinhalt wird durch Außenkühlung oder durch einen eingebundenen Vakuum-Verdampfungkühler auf einer Temperatur von unter 35 °C gehalten. Durch Abnahme der teilneutralisierten Lösung vor dem Reaktor wird das Volumen der Reaktionsschlaufe konstant gehalten.

Ein wesentlicher Vorteil des erfindungsgemäßen Verfahrens besteht darin, daß es möglich ist, in wirtschaftlicher Weise lagerstabile und damit marktfähige Lösungen mit einem Gehalt von 5 bis 50 Gew.-%, vorzugsweise 10 bis 40 Gew.-% und insbesondere 15 bis 35 Gew.-% Natriumperoxomonosulfat zur Verfügung zu stellen. Während bei der vorbekannten Herstellung $NaHSO_5$ enthaltender Lösungen zum Zwecke der Trocknung derselben die Ausbeute an Aktivsauerstoff bereits während der Teilneutralisation der eingesetzten schwefelsauren Caro'schen Säure stark abnahm, gelingt es nach dem erfindungsgemäßen Verfahren, die gewünschten Lösungen mit einer Aktivsauerstoffausbeute von im allgemeinen über 90 % zu gewinnen. Bei der besonders bevorzugten Ausführungsform, bei welcher eine aus 70 bis 85 gew.-%igem Wasserstoffperoxid und 50 bis 70 gew.-%igem Oleum erhältliche $H_2SO_5$ / $H_2SO_4$-Lösung teilneutralisiert wird, ist es möglich, insbesondere bei der dargestellten kontinuierlichen Betriebsweise, die Aktivsauertoffausbeute, bezogen auf eingesetztes Wasserstoffperoxid, auf über 90 % zu halten. Die befriedigende Lagerstabilität bezüglich des Gehalts an Aktivsauerstoff als auch der Freiheit an Trübungsstoffen der erfindungsgemäß hergestellten Lösungen erlaubt es, auf die aufwendige und ausbeutemindernde Trocknung der Lösungen zum Zwecke der Gewinnung eines lagerstabilen $NaHSO_5$-Produktes zu verzichten; zusätzlich bedarf es keiner Lösestation am Ort der Verwendung.

Durch die Beispiele und Vergleichsbeispiele werden die Erfindung und deren Vorteile weiter offengelegt.

**Beispiele 1 bis 7**

In einem mit Rührer, Thermometer und Außenkühlung versehenen Kolben wird die wäßrige Wasserstoffperoxidlösung vorgelegt. Unter starker Kühlung - Reaktionstemperatur 0 bis 10 °C - wird Schwefelsäure oder Oleum zugetropft. Das Molverhältnis von $H_2O_2$ zu Gesamt-$SO_3$, die Konzentrationen der Reaktanden, die Ausbeute sowie die Analysen der erhaltenen $H_2SO_5$ / $H_2SO_4$-Lösung folgen aus der Tabelle 1a.

Zur Teilneutralisation werden in einem wie vorstehend ausgestatteten Kolben über zwei Tropftrichter Natronlauge (37 Gew.-%) und die vorstehend erzeugte $H_2SO_5$ / $H_2SO_4$-Lösung im angegebenen Molverhältnis eingebracht, wobei zum Zwecke der besseren Temperaturkontrolle und Durchmischung eine kleine Menge $NaHSO_5$ / $NaHSO_4$-Lösung aus einem vergleichbaren vorhergehenden Ansatz oder Wasser vorgelegt wird. Die Reaktionstemperatur wird auf 25 bis 35 °C gehalten, Das Molverhältnis von Gesamt-$SO_3$ zu NaOH, die Analyse der Lösung und Ausbeute folgen aus der Tabelle 1b.

Erfindungsgemäß sind die Beispiele 3 und 7; die Beispiele 1, 2, 5 und 6 liegen z. T. außerhalb der erfindungsgemäßen Molverhältnisse und/oder enthalten in der $H_2SO_5$ / $H_2SO_4$-Lösung zu viel $H_2O_2$, was zu niedrigen Ausbeuten bei der Teilneutralisation und/oder ungenügender Lagerstabilität führt.

Dem Beispiel 4 liegen zwar die erfindungsgemäßen Molverhältnisse zugrunde, jedoch kam es wegen zu starken Eindampfens zur Ausfällung von im wesentlichen Natriumsulfat: Beispiel 4 zeigt damit, daß dem Eindampfen mit zunehmendem Na-Überschuß gegenüber dem Gesamt-$SO_3$ Grenzen gesetzt sind.

**TABELLE 1a:** Herstellung und Analyse der $H_2SO_5$ / $H_2SO_4$-Lösung

| Beispiel Nr. | Wäßr. $H_2O_2$ (Gew-% $H_2O_2$) | Ansatz Oleum (Gew-% $SO_3$) | Molverhältnis $H_2O_2$:Gesamt-$SO_3$ | $H_2SO_5$ (Gew-%) | $H_2SO_4$ (Gew-%) | $H_2S_2O_8$ (Gew-%) | $H_2O_2$ (Gew-%) | Ausbeute % $H_2SO_5$ bez. auf $H_2O_2$ |
|---|---|---|---|---|---|---|---|---|
| 1 | 70 | 65 | 1 : 1 | 65 | 16 | 1,2 | 6 | 77 |
| 2 | wie Beispiel 1 | | | | | | | |
| 3 | 70 | 65 | 1 : 1,5 | 58 | 32 | 2,8 | 1,2 | 92 |
| 4 | wie Beispiel 3 | | | | | | | |
| 5 | 70 | 20 | 1 : 1,3 | 49 | 30 | 1 | 5 | 74 |
| 6 | 85 | 0(=$H_2SO_4$) | 1 : 1,3 | 49 | 30 | 1 | 5,5 | 74 |
| 7 | 70 | 65 | 1 : 1,54 | 56 | 33 | 2,8 | 1,0 | 92 |

EP 0 463 304 B1

EP 0 463 304 B1

**TABELLE 1b:** Teilneutralisation der Lösungen gemäß Tabelle 1a

| Beispiel Nr. | Molverhältnis Gesamt-$SO_3$ : NaOH | Analyse (Gew.-%) | | | Ausbeute % $NaHSO_5$ bezogen auf eingesetztes $H_2SO_5$ |
|---|---|---|---|---|---|
| | | $NaHSO_5$ | $NaHSO_4$ | $H_2O_2$ | |
| 1 | 1 : 0,5 | 22 | 21 | 3,2 | 96 *) |
| 2 | 1 : 1,0 | 33 | 16 | 2,2 | 86 |
| 3 | 1 : 1,0 | 30 | 21 | 0,5 | 98 |
| 4 | 1 : 1,27 | 44 | nb | 0,3 | 96 **) |
| 5 | 1 : 1 | 25 | 20 | 2,0 | 85 |
| 6 | 1 : 1 | 28 | 20 | 2,5 | 87 |
| 7 | 1 : 1 | 30,5 | 22 | 0 | 95 |

*) Die Lösung enthält zusätzlich 18 Gew.-% $H_2SO_5$ und 9 Gew.-% $H_2SO_4$; trotz des hohen $H_2O_2$-Gehalts war die Ausbeute hoch, aber die Lösung war unzureichend lagerstabil - Verlust an $HSO_5^-$ innerhalb einer Woche bei 20 °C 41,5 % des Ausgangswerts.

**) Die Teilneutralisation erfolgte unter vermindertem Druck und Abdampfen von Wasser, wobei etwas Feststoff ausfiel (die Analyse bezieht sich auf das Filtrat).

**Beispiele 8 und 9**

Um den Einfluß des Wasserstoffperoxidgehalts auf die Ausbeute bei der Teilneutralisation und die Lagerstabilität zu verdeutlichen, wurden dem Ansatz des Beispiels 7 direkt vor der Teilneutralisation 4,5 Gew.-% Wasserstoffperoxid zugefügt (Beispiel 8).

Zur Lösung des Beispiels 7 wurden nach beendeter Teilneutralisation 3 Gew.-% Wasserstoffperoxid zugefügt (Beispiel 9). Die Ergebnisse, $NaHSO_5$ - und $H_2O_2$-Gehalt direkt nach der Herstellung der Lösungen einschließlich der zusätzlichen $H_2O_2$-Zugabe sowie nach 1 Woche Lagerung bei Raumtemperatur sowie Ausbeute bzw. Restwert an $NaHSO_5$, bezogen auf in der Teilneutralisation eingesetztes $H_2SO_5$, folgen aus der Tabelle 2.

## TABELLE 2

| Beispiel Nr. | | $NaHSO_5$ (Gew-%) | $H_2O_2$ (Gew-%) | Ausbeute an $NaHSO_5$ (% bezogen auf eingesetztes $H_2SO_5$) |
|---|---|---|---|---|
| 7 | nach Herstellung | 30,5 | 0 | 95 |
| | nach 1 Woche | 30,0 | 0 | 94 |
| 8 | nach Herstellung | 24,5 | 2,2 | 81 |
| | nach 1 Woche | 16,0 | 0 | 53 |
| 9 | nach Herstellung | 28,6 | 3,1 | 94 |
| | nach 1 Woche | 21,7 | 1,5 | 71 |

**Beispiele 10 und 11**

Die Versuchsapparatur für die Teilneutralisation bestand aus einem Mehrhalskolben mit Innenthermometer, Rührer, Destillationsbrücke mit Vorlage, Vakuumpumpe sowie zwei Pumpen zur Feinstdosierung der Reaktionskomponenten in den Mehrhalskolben.

Zu einer Vorlage von 100 ml Wasser im Kolben werden kontinuierlich eine wäßrige $H_2SO_5$ / $H_2SO_4$-Lösung - hergestellt gemäß den Angaben in Beispiel 1 - und eine 37 gew.-%ige Natronlauge im gewünschten Mengenverhältnis eingespeist. Über die Vakuumanlage wird eine Reaktionstemperatur von 25 bis 35 °C bei einem Druck im Bereich von etwa 10 bis 30 mbar eingestellt; gleichzeitig kann das mit den Rohstoffen zugeführte und bei der Neutralisation entstehende Wasser entfernt werden, um die gewünschte Konzentration an $NaHSO_5$ zu erhalten. Ein Teilstrom zur Konstanthaltung des Volumens an Reaktionsgemisch kann aus dem Kolben abgezogen werden - bei den Beispielen 10 und 11 wurde aber hierauf verzichtet. Die Ansatzmengen und Analysen sowie Ausbeuten sind der Tabelle 3 zu entnehmen.

Der Aktivsauerstoffverlust bei der Lagerung der erfindungsgemäß hergestellten Natriumperoxomonosulfat enthaltenden Lösung des Beispiels 10 bei Raumtemperatur beträgt innerhalb von 40 Tagen jeweils ca. 1,7 %, bezogen auf den Ausgangsgehalt, pro 10 Tage.

## TABELLE 3

|  | Beispiel 10 | Beispiel 11 |
|---|---|---|
| **Ansatz** für $H_2SO_5$ / $H_2SO_4$-Lösung |  |  |
| Konz. $H_2O_2$ (Gew-%) | 69 | 69 |
| Konz. Oleum (Gew-%) | 65 | 65 |
| Molverhältnis $H_2O_2$ : Gesamt-$SO_3$ | 1 : 1,54 | 1 : 1,54 |
| **Analyse** der $H_2SO_5$ / $H_2SO_4$-Lösung |  |  |
| $H_2SO_5$ (Gew.-%) | 55,5 | 56,3 |
| $H_2O_2$ (Gew.-%) | 0,95 | 0,96 |
| $H_2S_2O_8$ (Gew.-%) | 3,2 | 3,4 |
| **Teilneutralisation** |  |  |
| Molverhältnis Gesamt-$SO_3$ : NaOH | 1 : 1,23 | 1 : 1 |
| Menge $H_2SO_5$ / $H_2SO_4$-Lösung (g/h) | 100 | 100 |
| Natronlauge (g/h) | 110,5 | 89,6 |
| **Analyse** der $NaHSO_5$ / $NaHSO_4$-Lösung |  |  |
| $NaHSO_5$ (Gew.-%) | 26,97 | 30,45 |
| $NaHSO_4$ (Gew.-%) | 10,11 | 22,18 |
| $H_2O_2$ (Gew.-%) | 0,02 | 0,02 |
| **Ausbeute** an $NaHSO_5$ bez. auf eingesetztes $H_2SO_5$ | 94,3 | 95,0 |

**Beispiele 12 bis 14**

Gemäß der Verfahrensweise der Beispiele 1 bis 7 wurde eine wäßrige $H_2SO_5$ / $H_2SO_4$-Lösung teilneutralisiert. Eingesetzt wurde 70 gew.-%iges $H_2O_2$ und 65 gew.-%iges Oleum; das Molverhältnis von $H_2O_2$ zu Gesamt-$SO_3$ betrug 1 zu 1,16. Die Teilneutralisation mit 37 gew.-%iger Natronlauge erfolgte bis zu den in der Tabelle angegebenen pH-Werten (gemessen mittels einer Glaselektrode und pH-Meter). Die hieraus resultierenden Molverhältnisse von Gesamt-$SO_3$ zu NaOH, und die Ausbeuten an $NaHSO_5$, bezogen auf eingesetztes $H_2SO_5$, folgen aus der Tabelle 4.

TABELLE 4

| Beispiel Nr. | Molverhältnis Gesamt-$SO_3$:NaOH | pH-Wert | Ausbeute % $NaHSO_5$ bez. auf $H_2SO_5$ |
|---|---|---|---|
| 12 | 1 : 1,30 | 1 | 96,80 |
| 13 | 1 : 1,36 | 2 | 93,40 |
| 14 | 1 : 1,39 | 3 | 85,68 |

Beispiel 12 liegt innerhalb, die Beispiele 13 und 14 außerhalb der erfindungsgemäßen Grenzen. Bei den Beispielen 13 und 14 fällt bereits während der Teilneutralisation sowie bei der Lagerung Feststoff aus.

**Beispiel 15**

Eine $NaHSO_5$-Lösung, hergestellt analog Beispiel 11, jedoch mit höherer Konzentrierung, wurde durch Zugabe von Wasser auf unterschiedliche Konzentrationen an $NaHSO_5$ verdünnt. Die Lagerstabilität wurde durch 5-stündiges Lagern bei 70 °C bestimmt. In der Tabelle sind die Konzentration der Lösungen an $NaHSO_5$ sowie der Verlust an Aktivsauerstoff (AO-Verlust) in % vom Ausgangswert angegeben.

TABELLE

| Konzentration an $NaHSO_5$ (Gew.-%) | AO-Verlust (%) |
|---|---|
| 5 | 1,5 |
| 10 | 4,2 |
| 15 | 5,0 |
| 20 | 7,7 |
| 25 | 10,8 |
| 30 | 14,0 |
| 35 | 21,5 |

**Patentansprüche**

1. Verfahren zur Herstellung von lagerstabilen wäßrigen Natriumperoxomonosulfatlösungen mit einem Gehalt von 5 bis 50 Gew.-% Natriumperoxomonosulfat durch Teilneutralisation einer Caro'sche Säure und Schwefelsäure enthaltenden Lösung, welche erhalten wurde durch Umsetzung von Schwefelsäure oder Oleum mit mindestens 50 gew.-%igem wäßrigen Wasserstoffperoxid oder durch Elektrolyse einer mindestens 30 gew.-%igen wäßrigen Schwefelsäure mit nachfolgender Hydrolyse der gebildeten Peroxodischwefelsäure, mit Natriumhydroxid oder Natriumcarbonat bei einer Temperatur unter 50 °C,
dadurch gekennzeichnet,
daß man eine solche Caro'sche Säure ($H_2SO_5$) und Schwefelsäure enthaltende Lösung verwendet, wel-

12

che weniger als 3 Gewichtsteile Wasserstoffperoxid pro 100 Gewichtsteile Caro'sche Säure ($H_2SO_5$) enthält, und die Teilneutralisation bis zu einem Äquivalentverhältnis von Gesamt-$SO_3$ zu Natriumionen im Bereich von 1 zu 1 bis 1 zu 1,3 vornimmt und, sofern erwünscht, durch Verdünnen mit Wasser oder durch Abdestillieren von Wasser unter vermindertem Druck während oder nach der Teilneutralisation den Gehalt an $NaHSO_5$ einstellt.

2. Verfahren nach Anspruch 1,
dadurch gekennzeichnet,
daß man eine Caro'sche Säure und Schwefelsäure enthaltende Lösung verwendet, welche durch Umsetzung von etwa 70 bis etwa 85 gew.-%igem wäßrigen Wasserstoffperoxid mit Oleum mit einem $SO_3$-Gehalt von mindestens 20 Gew.-%, vorzugsweise über 50 Gew.-% $SO_3$, im Molverhältnis von Wasserstoffperoxid zu Gesamt-$SO_3$ von 1 zu 1,1 bis 1 zu 1,6 erhalten wurde.

3. Verfahren nach Anspruch 2,
dadurch gekennzeichnet,
daß man eine solche Lösung der Teilneutralisation zuführt, welche 50 bis 65 Gew.-% Caro'sche Säure und 20 bis 40 Gew.-% Schwefesäure und weniger als 1,5 Gew.-% Wasserstoffperoxid enthält.

4. Verfahren nach einem der Ansprüche 1 bis 3,
dadurch gekennzeichnet,
daß man die Teilneutralisation mit einer 10 bis 50 gew.-%igen Natronlauge bei einer Temperatur von höchstens 35 °C durchführt.

5. Verfahren nach einem der Ansprüche 1 bis 4,
dadurch gekennzeichnet,
daß man die Teilneutralisation kontinuierlich in einer Reaktionsschlaufe durchführt, dessen Reaktor mit einer wirksamen Kühlvorrichtung, mindestens einer Dosierstelle für die Caro'sche Säure enthaltende Lösung, mindestens einer Dosierstelle für Natronlauge und die Schlaufe mit einem Förderorgan und einer Abnahmestelle für die in der Reaktionsschlaufe umlaufende Natriumperoxomonosulfat enthaltende Reaktionslösung ausgestattet ist, wobei die Dosierstellen für Natronlauge jeweils in einem solchen Abstand von den Dosierstellen für die Caro'sche Säure enthaltende Lösung entfernt angeordnet sind, daß die zudosierte Caro'sche Säure mit der Reaktionslösung in der Schlaufe im wesentlichen homogen vermischt ist, bevor die Natronlauge zudosiert wird.

## Claims

1. A process for the preparation of storage stable aqueous sodium peroxymonosulphate solutions containing from 5 to 50% by weight of sodium peroxymonosulphate by partial neutralisation, by means of sodium hydroxide or sodium carbonate at a temperature below 50°C, of a solution containing Caro's acid and sulphuric acid obtained by the reaction of sulphuric acid or oleum with an at least 50% by weight aqueous hydrogen peroxide or by electrolysis of an at least 30% by weight aqueous sulphuric acid followed by hydrolysis of the resulting peroxydisulphuric acid, characterised in that the solution containing Caro's acid ($H_2SO_5$) and sulphuric acid used is one which contains less than 3 parts by weight of hydrogen peroxide per 100 parts by weight of Caro's acid ($H_2SO_5$) and the partial neutralisation is carried out up to an equivalent ratio of total $SO_3$ to sodium ions in the range of from 1 : 1 to 1 : 1.3 and, if desired, the $NaHSO_5$ content is adjusted by dilution with water or by removal of water by distillation at reduced pressure during or after the partial neutralisation.

2. A process according to Claim 1, characterised in that the solution containing Caro's acid and sulphuric acid used is one which has been obtained by the reaction of an about 70 to about 85% by weight aqueous hydrogen peroxide with oleum having an $SO_3$ content of at least 20% by weight, preferably above 50% by weight, of $SO_3$ in a molar ratio of hydrogen peroxide to total $SO_3$ of from 1 : 1.1 to 1 : 1.6.

3. A process according to Claim 2, characterised in that the solution which is subjected to partial neutralisation is one which contains from 50 to 65% by weight of Caro's acid and from 20 to 40% by weight of sulphuric acid and less than 1.5% by weight of hydrogen peroxide.

4. A process according to one of the Claims 1 to 3, characterised in that the partial neutralisation is carried

13

EP 0 463 304 B1

out with a 10 to 50% by weight sodium hydroxide solution at a temperature of at most 35°C.

5. A process according to one of the Claims 1 to 4, characterised in that the partial neutralisation is carried out continuously in a reaction loop whose reactor is equipped with an efficient cooling device, at least one dosing point for the solution containing Caro's acid and at least one dosing point for sodium hydroxide solution and the loop is equipped with a delivery device and a discharge point for the sodium peroxymonosulphate-containing reaction solution circulating in the reaction loop, the dosing points for sodium hydroxide solution being arranged at such a distance from the dosing points for the-solution containing Caro's acid that the Caro's acid introduced becomes substantially homogeneously mixed with the reaction solution in the loop before the sodium hydroxide solution is added.

**Revendications**

1. Procédé de préparation de solutions aqueuses stables au stockage de peroxomonosulfate de sodium d'une teneur de 5 à 50 % en poids de peroxomonosulfate de sodium (NaHSO$_5$) par neutralisation partielle d'une solution aqueuse contenant de l'acide de Caro (H$_2$SO$_5$) et de l'acide sulfurique, qu'on prépare par réaction d'acide sulfurique ou d'oléum avec de la solution aqueuse de peroxyde d'hydrogène à au moins 50 % ou par électrolyse d'une solution aqueuse d'acide sulfurique à au moins 30 % en poids avec hydrolyse successive de l'acide peroxodisulfurique formé, avec de l'hydroxyde de sodium ou du carbonate de sodium à une température inférieure à 50°C, caractérisé en ce qu'on utilise une solution contenant de l'acide sulfurique et cet acide de Caro, qui contient moins de 3 parties en poids de peroxyde d'hydrogène pour 100 parties en poids d'acide de Caro (H$_2$SO$_5$) et on réalise la neutralisation partielle jusqu'à une proportion d'équivalent de SO$_3$ total aux ions sodium dans l'intervalle de 1 à 1 jusqu'à 1,3, et si c'est souhaité, on ajuste la teneur en NaHSO$_5$ pendant ou après la neutralisation partielle par dilution avec de l'eau ou par distillation de l'eau sous pression réduite.

2. Procédé selon la revendication 1, caractérisé en ce qu'on utilise une solution contenant de l'acide de Caro et de l'acide sulfurique qu'on a obtenue par réaction du peroxyde d'hydrogène en solution aqueuse de 70 à 85 % en poids avec de l'oléum d'une teneur en SO$_3$ d'au moins 20 % en poids, de préférence DE plus de 50 % en poids de SO$_3$ en proportion molaire du peroxyde d'hydrogène au SO$_3$ total de 1 à 1,1 jusqu'à 1 à 1,6.

3. Procédé selon la revendication 2, caractérisé en ce qu'on neutralise partiellement une telle solution qui contient de 50 à 65 % en poids d'acide de Caro et 20 à 40 % en poids d'acide sulfurique et moins de 1,5 % en poids de peroxyde d'hydrogène.

4. Procédé selon l'une des revendications 1 à 3, caractérisé en ce qu'on réalise la neutralisation partielle avec une lessive de soude de 10 à 50 % en poids à une température de 35°C ou plus.

5. Procédé selon l'une des revendications 1 à 4, caractérisé en ce qu'on réalise en continu la neutralisation partielle dans une boucle de réaction, dont le réacteur est équipé d'un dispositif de réfrigération efficace, d'au moins un poste de dosage de la solution contenant l'acide de Caro, d'au moins un poste de dosage de la lessive de soude et la boucle est équipée d'un organe de refoulement et d'un poste de soutirage de la solution réactionnelle contenant le peroxomonosulfate de sodium circulant dans la boucle réactionnelle, les postes de dosage de la lessive de soude étant placés à une distance suffisante des postes de dosage de la solution contenant l'acide de Caro pour que l'acide de Caro ajouté à la solution réactive dans la boucle soit mélangé de façon sensiblement homogène avant l'addition avec dosage de la lessive de soude.